# FASCICULE DE BREVET EUROPEEN

(11) **EP 0 402 990 B1**
(45) Date de publication et mention de la délivrance du brevet: **31.03.1993**
(21) Numéro de dépôt: 90201449.7
(22) Date de dépôt: 01.06.1990
(51) Int. Cl.: B29C 33/52, H05B 6/22

(54) **Dispositif pour récupérer par fusion le métal constitutif d'un noyau fusible**
Vorrichtung zur Rekuperation durch Schmelzen des Metalls eines schmelzbaren Kerns
Device for recuperating by fusion the metal constituting a fusible core

(30) Priorité: 12.06.1989 FR 8907842
(43) Date de publication de la demande: 19.12.1990
(73) Titulaire: SOLVAY (Société Anonyme), B-1050 Bruxelles (BE)
(72) Inventeur: Dauphin, Yves, B-1060 Bruxelles (BE)
(74) Mandataire: Bouchoms, Maurice

(56) Documents cités:
- EP-A- 0 275 228
- DE-A- 3 149 264
- DE-A- 3 149 265
- FR-A- 1 103 539
- FR-A- 1 162 096
- FR-A- 1 492 063
- FR-A- 2 310 975
- GB-A- 1 250 476
- GB-A- 2 105 635
- US-A- 3 493 994
- KUNSTSTOFFE, vol. 77, no. 12, décembre 1987, pages 1237-1240, Carl Hanser Verlag, Munich, DE; C. HAUCK et al.: "Optimieren der Schmelzkerntechnik für das Thermoplast-Spritzgiessen"
- JAPANESE PATENT GAZETTE, semaine 8844, section Ch, classe A, no. 88-310660 (44), Derwent Publications Ltd, Londres, GB; & JP-A-63 227 310 (SHIN KOBE ELEC. MACH.) 21-09-1988

## Description

La présente invention concerne un dispositif particulier pour la récupération par fusion du métal constitutif d'un noyau fusible.

Pour réaliser, notamment par moulage par injection, des pièces creuses en matière thermoplastique, il est connu de recourir à la technique de moulage par noyau fusible. Selon cette technique qui est divulguée notamment dans le brevet FR-A-1162096, on place, de façon judicieuse, dans le moule d'injection un noyau fusible correspondant à la partie creuse de la pièce désirée et on procède à l'injection de la matière thermoplastique fondue dans le moule ainsi garni. Après démoulage, il convient alors d'éliminer, généralement par fusion, le noyau fusible pour obtenir finalement la pièce creuse moulée désirée.

Selon une première technique, qui est d'ailleurs évoquée dans le brevet précité, on peut, à cet effet, immerger la pièce moulée dans un bain contenant un liquide chaud tel que de l'huile portée et maintenue à température au moins égale à la température de fusion du matériau constitutif du noyau. Cette technique exige toutefois un temps relativement long car la chaleur doit être transmise au noyau au travers de la paroi de la pièce et donc au travers d'une matière thermoplastique peu thermoconductrice. En outre, cette technique exige le recours à des noyaux fusibles de température de fusion nettement inférieure à celle du matériau thermoplastique constituant la pièce, ce qui peut poser des problèmes lors du moulage par injection.

Selon une seconde technique, divulguée notamment dans le brevet GB-A-1250476 et dans la demande de brevet JA-A-63-227310, on peut éliminer le noyau fusible en insérant la pièce moulée dans une bobine de chauffage par induction électrique. Cette technique présente l'avantage que la chaleur de fusion du noyau est directement générée au sein de ce dernier et permet donc une fusion plus rapide du noyau.

Dans cette technique, il faut toutefois prendre les précautions nécessaires pour éviter tout écoulement accidentel de métal fondu sur la bobine d'induction et partant tout risque de court-circuit. En outre, la demanderesse a constaté que le noyau fondait d'abord en surface suite à l'effet de peau et ce, particulièrement dans les parties de grandes sections normales au champ d'induction et, qu'après fusion des zones superficielles, le chauffage par induction cessait dramatiquement d'être efficace car, à ce moment, les sections de métal restant à fondre sont faibles. Il en résulte donc que cette seconde technique ne convient pas pour éliminer les dernières traces du noyau fusible et, en conséquence, les pièces moulées produites peuvent encore contenir des particules métalliques résiduelles provenant d'une élimination incomplète du noyau fusible.

Dans le brevet US-A-4464324, on a proposé, par ailleurs, une technique d'élimination d'un noyau fusible qui consiste à plonger la pièce moulée dans un bain de liquide chaud, le noyau fusible pouvant être équipé de résistances électriques qui sont raccordées à une source de courant électrique. De cette façon, le courant électrique permet une fusion rapide de la majeure partie centrale du noyau et le bain chaud concourt à provoquer la fusion des dernières particules solides du noyau. Toutefois, cette technique nécessite la réalisation de noyaux fusibles particuliers et coûteux puisqu'équipés de résistances électriques.

La demanderesse a maintenant mis au point un dispositif pour l'élimination complète d'un noyau fusible utilisé pour mouler une pièce creuse qui se révèle très efficace et qui n'exige pas la réalisation de noyaux fusibles particuliers.

La présente invention concerne dès lors un dispositif tel que décrit dans "Kunstoffe" Vol-77, n^{º}12, décembre 1987, pages 1237-1240, qui décrit un dispositif pour la récupération par fusion du métal constitutif d'un noyau fusible utilisé pour mouler une pièce creuse en matière plastique comportant un bain d'un liquide porté à une température au moins égale à la température de fusion dudit métal, des moyens pour introduire et maintenir la pièce creuse dans ce bain et des moyens pour chauffer par induction électrique le noyau fusible de la pièce creuse immergée dans le bain. Selon l'invention le dispositif se caractérise en ce que le bain est contenu dans une enceinte étanche réalisée en un matériau non conducteur de l'électricité et résistant à la température du bain et en ce que les moyens de chauffage par induction électrique sont disposés à l'extérieur et autour de ladite enceinte.

Le dispositif conforme à l'invention permet dès lors une exploitation simultanée d'un chauffage par un liquide chaud et d'un chauffage par induction électrique et ce dans des conditions optimales.

En effet, du fait que le moyen de chauffage par induction électrique est situé en dehors de l'enceinte, celui-ci est facilement accessible, par exemple pour une éventuelle réparation, et le contrôle de son fonctionnement est facilité. En outre, le refroidissement du moyen de chauffage par induction électrique est rendu plus aisé. Ainsi, ce refroidissement peut être assuré par de l'eau sans risque d'une fuite dans le bain chaud et sans réfrigération simultanée et non souhaitable du bain de liquide. Par ailleurs, les risques de souillure des spires du moyen de chauffage électrique lors de l'écoulement du métal fondu constitutif du noyau fusible sont éliminés. Enfin, l'utilisation d'un moyen de chauffage situé à l'extérieur du bain permet l'utilisation d'une enceinte étanche de volume et donc d'encombrement moindre et partant la mise en oeuvre d'un volume de liquide thermique également moindre.

Par ailleurs, dans le dispositif conforme à l'invention, le chauffage par induction électrique provoque une fusion rapide du noyau en commençant par sa surface et par les zones de plus grandes sections normales au champ d'induction et partant l'écoulement du métal fondu dans ces zones, ce qui permet une pénétration, dans l'espace ainsi libéré entre la pièce injectée et ce qui reste du noyau, du liquide chaud du bain qui facilite la fusion des dernières traces solides du noyau fusible lorsque le chauffage par induction électrique devient moins efficace.

Pour la réalisation de l'enceinte étanche pour le bain liquide, on choisit de préférence un matériau non conducteur de l'électricité et pouvant résister au bain liquide à des températures comprises entre 100 et 250°C.

A titre de tels matériaux, on peut citer notamment :
- les verres et les céramiques;
- les résines thermodurcissables éventuellement chargées de verre ou de matière minérale telles que les résines époxydes, les résines de polyesters, les résines phénoliques et les résines à base de mélamine;
- les résines thermoplastiques à point de fusion élevé telles que les polymères fluorés comme le polyfluorure de vinylidène, les polyéther(s)-cétone(s), les polyéthers-imides, etc.

Le moyen de chauffage par induction électrique est généralement constitué par une bobine entourant l'enceinte qui est alimentée d'un courant haute fréquence de 400 à 20.000 Hz sous une puissance nominale de 100 à 250 kW. Lors de la réalisation du dispositif conforme à l'invention, il convient d'éviter la présence de tout élément métallique à une distance de la bobine inférieure à 30 cm et de préférence inférieure à 40 cm car celui-ci risquerait de s'échauffer indûment sous l'action du chauffage par induction électrique.

Parmi les différents liquides qui peuvent être utilisés, on peut citer notamment :
- les huiles thermiques minérales ou de synthèse telles qu'en particulier les mélanges d'isomères du dibenzyltoluène;
- les polypropylèneglycols de masse moléculaire suffisamment élevée pour éviter une évaporation trop importante;
- les polyalcools aliphatiques modifiés;
- les bains de sels fondus à haute température tels que des bains en mélanges de nitrates et de nitrites.

Il convient évidemment de s'assurer de la compatibilité du liquide choisi avec les matériaux en présence (bac et pièces traitées) et des possibilités de lavage ultérieur des pièces traitées

Pour la réalisation des moyens pour introduire et maintenir la pièce creuse dans le bain du dispositif conforme à l'invention, il convient évidemment d'utiliser des matériaux non conducteurs de l'électricité et résistant à la température du bain. A cet effet, on peut notamment utiliser les mêmes matériaux que pour la réalisation de l'enceinte étanche. L'introduction de la pièce creuse à traiter dans le bain du dispositif peut être réalisée selon un mouvement continu ou séquencé. En particulier, lorsque le noyau fusible présente une partie de section normale au champ d'induction moindre, il peut être avantageux d'introduire d'abord cette partie dans le bain et dans le champ d'induction puis seulement les parties de section plus importante.

Il a, par ailleurs, été constaté que l'efficacité du dispositif conforme à l'invention peut encore être améliorée en équipant les moyens pour introduire et maintenir la pièce creuse dans le bain de liquide d'un système pouvant assurer une mise en vibration de la pièce creuse. A cet effet, on peut utiliser tout type de vibreur tel que, par exemple, un moteur asynchrone équipé d'un balourd. Les fréquences de vibration préférées sont comprises entre 2 et 100 Hz. Il a, en effet, été constaté que ces vibrations ont pour effet de favoriser l'écoulement du noyau fusible, fondu ou même encore solide, hors de la pièce creuse, d'éviter toute adhérence locale entre la pièce creuse et une partie quelconque du noyau fusible et de diminuer tout risque de surchauffe du matériau constitutif du noyau fusible. Il a encore été constaté qu'il n'est pas nécessaire de soumettre la pièce creuse à des vibrations dès son introduction dans le bain de liquide mais au contraire que cette mise en vibration de la pièce creuse peut avantageusement être différée de 1 à 20 secondes dans le temps par rapport au début du chauffage par induction électrique. Par ailleurs, il est avantageux de maintenir cette mise en vibration durant le retrait de la pièce creuse du bain de liquide après fusion totale du noyau fusible de façon à faciliter l'écoulement, hors de la pièce creuse, des dernières traces de métal fondu du noyau fusible et du liquide thermique constituant le bain.

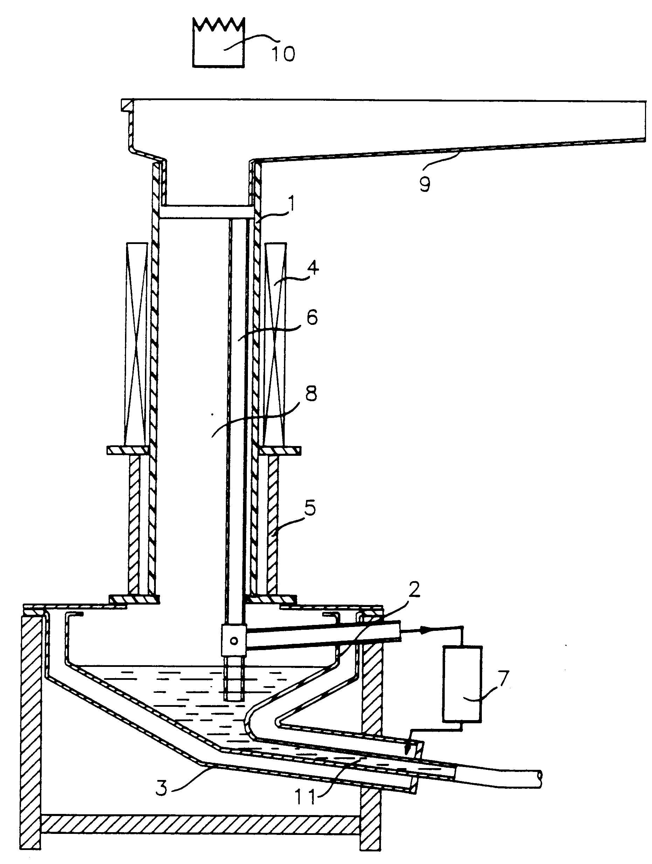

Le dispositif conforme à l'invention est par ailleurs explicité plus en détail dans la description qui va suivre d'un mode de réalisation particulier. Dans cette description, on se référera à la figure unique du dessin annexé qui représente, schématiquement et en coupe, le dispositif de récupération.

Ainsi qu'il apparaît sur la figure, le dispositif est constitué essentiellement par un bac cylindrique vertical (1), réalisé en résine époxy renforcée par un tissu de fibres de verre (commercialisée sous la marque commerciale EPOGLASS 11 par la firme ISOLANTS VICTOR HALLET S.A.), qui est raccordé à sa base à un collecteur métallique (2) constitué par un entonnoir disposé dans une enveloppe métallique (3). Une bobine de chauffage par induction électrique (4) est maintenue autour de la partie supérieure du bac cylindrique (4) par un support (5) de façon telle que la partie inférieure de la bobine soit située à au moins 40 cm du collecteur métallique (2). Le bac cylindrique (1) est équipé intérieurement d'un tube de débordement (6) réalisé en un matériau identique à celui utilisé pour réaliser le bac cylindrique (1). Le tube de débordement est raccordé à sa base à un dispositif de conditionnement thermique (7) du liquide, en l'occurrence un polyalcool aliphatique modifié produit et commercialisé par la firme BADISCHE ANILIN-UND SODAFABRIK sous la marque commerciale LUTRON, constituant le bain (8) dans lequel la pièce creuse à traiter doit être introduite et maintenue. La sortie du dispositif de conditionnement thermique (7) est raccordée à l'enveloppe métallique (3). La partie supérieure du bac cylindrique (1) est équipée d'une gouttière (9) réalisée en matière plastique non conductrice de l'électricité.

Lors de sa mise en service, le dispositif qui vient d'être décrit est rempli au moyen d'huile minérale maintenue à une température au moins égale à la température de fusion du métal constituant le noyau fusible des pièces creuses à traiter, le niveau supérieur de cette huile dans le bac cylindrique (1) étant fixé par l'extrémité supérieure du tube de débordement (6). En fait, l'huile est introduite dans le dispositif via l'enveloppe (3), déborde dans le collecteur (2), remplit le bac cylindrique (1) jusqu'au niveau fixé par l'extrémité supérieure du tube de débordement (6) et retourne via ce tube de débordement (6) au dispositif de conditionnement thermique (7) pour être de nouveau réintroduite dans le dispositif via l'enveloppe (3) selon une circulation en continu.

Le dispositif est, en outre, complété par des moyens de manipulation (10), représentés schématiquement, qui ont pour fonction d'amener les pièces creuses à traiter dans le bac cylindrique (1) et de les retirer de ce bac après traitement. Les parties de ces moyens de manipulation (10) qui sont appelées à être introduites dans le bac cylindrique (1) sont réalisées en un matériau non conducteur de l'électricité et résistant à la température de l'huile minérale contenue dans le bac cylindrique (1). Les moyens de manipulation (10) qui sont généralement constitués par un robot équipé d'une pince adéquate sont, en outre, équipés d'un système, non représenté, pouvant assurer une mise en vibration de la pièce à traiter.

Le cycle de fonctionnement du dispositif ainsi décrit est le suivant, le dispositif étant supposé être en régime.

Une pièce creuse à traiter est amenée par les moyens de manipulation (10) dans le bac cylindrique (1) et plongée dans l'huile minérale chaude maintenue dans ce bac. Durant cette introduction de la pièce creuse, la bobine (4) est mise en service de façon à fondre le noyau fusible depuis sa surface de sorte qu'en s'écoulant, il permet le passage de l'huile minérale chaude et partant la fusion totale du noyau fusible. Le métal fondu s'écoule par gravité au travers du bac cylindrique (1) et s'accumule dans le collecteur métallique (2). Le métal fondu peut alors être retiré du collecteur via une buselure d'évacuation (11) et être réutilisé pour la production d'un nouveau noyau fusible.

Afin de faciliter le traitement de la pièce creuse maintenue dans le bac cylindrique, il se révèle très utile de mettre en vibration la pièce traitée par l'intermédiaire du système équipant les moyens de manipulation.

Lorsque le traitement de la pièce creuse est terminé, la bobine (4) est mise hors service et la pièce est retirée du bac cylindrique (1). Durant le retrait de la pièce traitée hors du bac cylindrique (1), il est avantageux de maintenir cette pièce en vibration pour la débarrasser de l'huile minérale chaude qui adhère à ses parois, cette huile étant récupérée par la gouttière (9) et réintroduite dans le bac cylindrique (1).

## Revendications

1. Dispositif pour la récupération par fusion du métal constitutif d'un noyau fusible utilisé pour mouler une pièce creuse en matière plastique comportant un bain d'un liquide porté à une température au moins égale à la température de fusion dudit métal, des moyens pour introduire et maintenir la pièce creuse dans ce bain et des moyens pour chauffer par induction électrique le noyau fusible de la pièce creuse immergée dans le bain, caractérisé en ce que le bain est contenu dans une enceinte étanche (1) réalisée en un matériau non conducteur de l'électricité et résistant à la température du bain et en ce que les moyens de chauffage par induction électrique (4) sont disposés à l'extérieur et autour de ladite enceinte (1).

2. Dispositif suivant la revendication 1, caractérisé en ce que les moyens (10) pour maintenir la pièce creuse dans le bain de liquide sont équipés d'un système pouvant assurer une mise en vibration de la pièce creuse maintenue dans le bain.

3. Dispositif suivant la revendication 1, caractérisé en ce que l'enceinte étanche (1) est réalisée en une matière plastique thermodurcissable.

4. Dispositif suivant la revendication 1, caractérisé en ce que l'enceinte étanche (1) est réalisée en verre.

5. Dispositif suivant la revendication 1, caractérisé en ce que les moyens (10) pour introduire et maintenir la pièce creuse dans le bain sont réalisés en un matériau non conducteur de l'électricité et résistant à la température du bain.

## Patentansprüche

1. Vorrichtung zur Wiedergewinnung durch Schmelzen des Metalls eines schmelzbaren Kerns, der zum Gießen eines Hohlkörpers aus Kunststoff verwendet wird, umfassend ein Bad einer Flüssigkeit, die auf eine Temperatur gebracht wird, die wenigstens gleich der Schmelztemperatur des Metalls ist, Mittel zum Einführen und Halten des Hohlkörpers in dem Bad und Mittel zum Erhitzen durch elektrische Induktion des schmelzbaren Kerns des in das Bad getauchten Hohlkörpers, dadurch gekennzeichnet, daß das Bad in einer dichten Ummantelung (1) enthalten ist, die aus einem nicht elektrizitätsleitenden Material hergestellt und gegenüber der Temperatur des Bades beständig ist und, daß die Mittel zum Erhitzen durch elektrische Induktion (4) außerhalb und um die Ummantelung herum (1) angebracht sind.

2. Vorrichtung nach Anspruch 1, dadurch gekennzeichnet, daß die Mittel (10) zum Halten des Hohlkörpers in dem Flüssigkeitsbad mit einem System ausgerüstet sind, das ein In-Vibration-Versetzen des in dem Bad gehaltenen Hohlkörpers bewirken kann.

3. Vorrichtung nach Anspruch 1, dadurch gekennzeichnet, daß die dichte Ummantelung (1) aus einem duroplastischen Kunststoff besteht.

4. Vorrichtung nach Anspruch 1, dadurch gekennzeichnet, daß die dichte Ummantelung (1) aus Glas besteht.

5. Vorrichtung nach Anspruch 1, dadurch gekennzeichnet, daß die Mittel (10) zum Einführen und Halten des Hohlkörpers in dem Bad aus einem nicht elektrizitätsleitenden und gegenüber der Temperatur des Bades beständigen Material hergestellt sind.

## Claims

1. Device for the recovery, by melting, of the metal constituting a fusible core employed for moulding a hollow plastic article, comprising a bath of a liquid heated to a temperature at least equal to the melting temperature of the said metal, means for introducing and holding the hollow article in this bath and means for heating, using electrical induction, the fusible core of the hollow article immersed in the bath, characterised in that the bath is contained in a leakproof enclosure (1) made of an electrically nonconductive material which withstands the temperature of the bath and in that the means of heating using electrical induction (4) are arranged outside and around the said enclosure (1).

2. Device according to Claim 1, characterised in that the means (10) for holding the hollow article in the liquid bath are equipped with a system capable of ensuring an application of vibration to the hollow article held in the bath.

3. Device according to Claim 1, characterised in that the leakproof enclosure (1) is made of a heat-curable plastic.

4. Device according to Claim 1, characterised in that the leakproof enclosure (1) is made of glass.

5. Device according to Claim 1, characterised in that the means (10) for introducing and holding the hollow article in the bath are made of an electrically nonconductive material which withstands the temperature of the bath.
